# EUROPEAN PATENT APPLICATION

(11) **EP 2 713 333 A1**
(43) Date of publication of application: **02.04.2014**
(21) Application number: 12186189.2
(22) Date of filing: 26.09.2012
(51) Int. Cl.: G06Q 50/12, G06Q 30/02

(54) **Method and system of suggesting establishments**

(71) Applicant: BlackBerry Limited, Waterloo, ON N2K 0A7 (CA)
(72) Inventor: Abellera, Suzanne, Palo Alto CA 94306 (US); Klassen, Gerhard Dietrich, Waterloo, Ontario N2L 3W8 (CA); Kolstad, Kjell-Eivind, Waterloo, Ontario N2L 3W8 (CA)
(74) Representative: Roberts, Gwilym Vaughan

(57) **Abstract**

The present disclosure provides for search optimization of searches for establishments by geographic location or area. The geographical locations of one or more establishments are monitored to determine at least one indicator of popularity of the establishment present at the geographical location. A popularity score of the monitored establishment or establishments may be generated from the determined at least one indicator of popularity. In response to a search query, the popularity score of the monitored establishments may be returned by a search engine server as a search result to a user via an electronic communication device.

## Description

### CROSS-REFERENCE TO RELATED APPLICATIONS

The application is related to co-pending Attorney Docket Number 39789-1-US-PAT, filed on even date herewith, which is incorporated herein in its entirety.

### TECHNICAL FIELD

The present disclosure relates generally to the field of search optimization, and more particularly to search optimization in a communications network.

### BACKGROUND

Users of electronic communication devices, including mobile or wireless devices such as smart phones, mobile phones, and personal digital assistants or PDAs, have access to a number of convenient and useful applications installed on their electronic communication devices. Email, calendar, Web browser and Internet search applications are some examples of such applications.

With use of a Web browser or search application, an electronic communication device operating in a communication environment, such as a wireless network, may interface with a server of another communication network (e.g., the Internet) to access information. A user of the communication device may therefore enter a search query using a search application available on the communication device in order to receive relevant, useful information in response. One search commonly performed by a user of a mobile electronic communication device is a search to find good restaurants to frequent in a given geographical area. This is particularly helpful when the user is visiting an area that is unfamiliar. Search programs for restaurants, however, typically identify and rank restaurants by type, such as Mexican, Asian, Italian, American, etc. If the user does not know a type of restaurant to search, and simply only wishes to find the best restaurant in a given area without being constrained by type of restaurant, the search applications currently available are not very helpful.

### BRIEF DESCRIPTION OF THE DRAWINGS

Example embodiments of the present disclosure will be described below with reference to the included drawings such that like reference numerals refer to like elements and in which:

**FIG. 1** is a block diagram of a communications system that includes a search engine server, a communications network, and various communication devices, in accordance with various aspects of the present disclosure;

**FIG. 2** is a block diagram of a wireless communication system 200, in accordance with various aspects of the present disclosure;

**FIG. 3** is a detailed block diagram of an example mobile communication device, in accordance with various aspects of the present disclosure;

**FIG. 4** illustrates applications that may be stored in a memory of a communication device, in accordance with various aspects of the present disclosure; and

**FIG. 5** illustrates a flow illustrative of various methods, in accordance with various example embodiments of the present disclosure.

### DETAILED DESCRIPTION

In accordance with the various example embodiments presented herein, a user of a communication device is able to better and more efficiently search for an establishment in a given geographical location or area on the basis of establishment popularity as opposed to establishment type. Utilizing a search application, such as a web browser accessible to the user through the user interface of the search application, the user may search for an establishment, such as a restaurant, entertainment venue, sports complex, retail establishment, or the like, over the Internet or World Wide Web. The user may search for a popular establishment in a given geographical area or location as reflected in a popularity score or ranking assigned to one or more establishments returned to the user in response to the search query. The popularity score or ranking of an establishment is generated from one or more indicators of popularity of the establishment present at the location of the establishment that can be observed and recorded. The popularity score returned for an establishment may reflect the popularity of a particular establishment vis-à-vis other establishments, in which case the returned search result may be a popularity ranking. The user need not specify a type of establishment for the search query. Generation of an establishment's popularity score or ranking is transparent to the user and may be performed by one or more search engine servers.

Indicators of popularity of one or more establishments may be determined by monitoring the geographical location of the establishments to determine indicators of popularity present at the time of monitoring. Monitoring the geographical location of an establishment may include gathering images or photos of the geographical location to determine the number of cars, car types, number of people, length of lines or queues of people, license plates, etc. present at the establishment. Generally, more cars, people, and longer lines at the establishment location, for example, will yield a higher popularity score. Such images may be taken by cameras permanently at the location, by satellite imaging, webcam, or even by cameras that are part of mobile communications devices, such as smartphones, cellular phones, tablets, PDS, etc. carried by persons who are located at the establishment. Monitoring may also be provided by determining the number of mobile phone users in the area, the number of near field communication (NFC) tabs in the area, and volume of cell phone use. From this information, the estimated number of mobile phone users and whether these users are local, for example, can be deduced or at least estimated. Generally, the presence of more local people at an establishment or a higher call volume at that location, for example, favors a higher popularity score.

Therefore, in accordance with an aspect of the present disclosure, there is provided a method for determining popularity of one or more establishments located in a geographical area: monitoring a geographical location of an establishment located in the geographical area to determine at least one indicator of popularity of the establishment; and generating a popularity score of the monitored establishment from the determined at least one indicator of popularity of the establishment.

In accordance with another aspect of the present disclosure, there is provided a non-transitory computer-readable medium having computer-executable instructions for causing a server having a processor and associated memory to optimize search results including: determining at least one indicator of popularity of an establishment from information collected at a geographical location of the establishment; and generating a popularity score of the monitored establishment from the determined at least one indicator of popularity of the establishment.

In accordance with a further aspect of the present disclosure, there is provided a search engine server, coupled to a communications network, that facilitates locale centric search optimization, including: a processor; and a search database coupled to and in cooperative arrangement with the processor, and the processor and the search database configured to: in response to a received search query, determine at least one indicator of popularity of an establishment from information collected at a geographical location of the establishment; and generate a popularity score of the monitored establishment from the determined at least one indicator of popularity of the establishment.

For simplicity and clarity of illustration, reference numerals may be repeated among the figures to indicate corresponding or analogous elements. Numerous details are set forth to provide an understanding of the example embodiments described herein. The example embodiments may be practiced without these details. In other instances, well-known methods, procedures, and components have not been described in detail to avoid obscuring the example embodiments described. The description is not to be considered as limited to the scope of the example embodiments described herein.

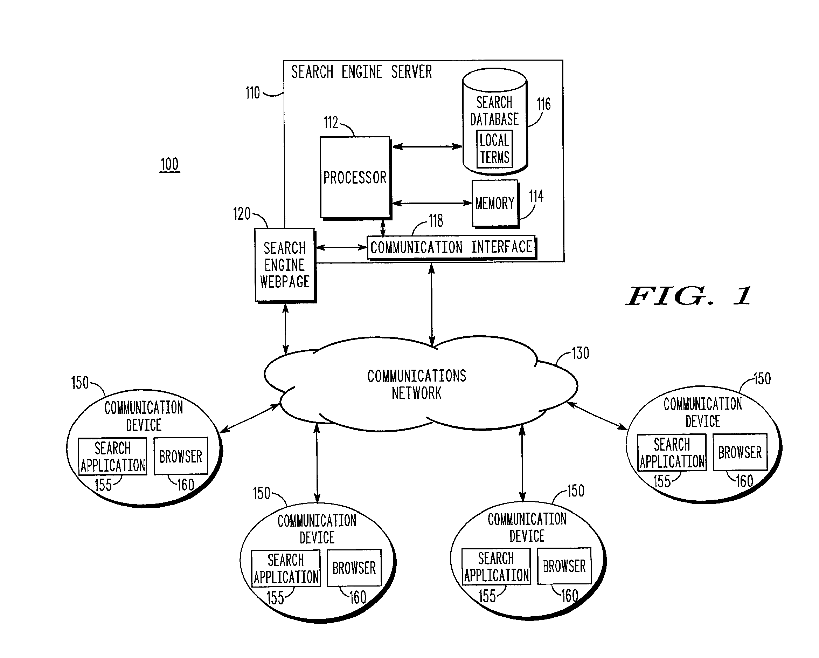

Referring now to **FIG. 1****,** a block diagram of a distributed communications system that includes a search engine server, a communications network, and various communication devices, in accordance with various example embodiments of the present disclosure, is illustrated. The distributed system 100 includes search engine server 110 and a number of communication devices 150, all of which are coupled to communications network 130. Although network 130 may be the World Wide Web or Internet, and in fact search engine server 110 may reside on the World Wide Web, it is understood that the search engine servers and communication devices 150 may be coupled together by various types of networks, such as local area networks (LANs), other wide area networks (WANs) and regional networks accessed over telephone lines, such as commercial information services.

Search engine server 110 may include a processor 112, a memory 114, search database 116, and communication interface 118. The search engine server 110 is able to communicate with the communications network via communication interface 118, as shown. Search engine server permits network users, upon navigating to the search engine web server URL or sites on other web servers capable of submitting queries to search engine server 110, to enter queries to which the search engine server generates a search result list. The search engine server 110 can generate a list of hypertext links to documents that contain information relevant to search terms entered by the user at the user interface of the communication device 150. This list may be transmitted in the form of a web page, to the user at his communication device 150 via the communications network 130, where the list can be displayed on a browser 160 running on the communication device.

Search engine server 110 includes a search database 116 of search listing records used to generate search results in response to user queries. The users may access, via their browsers 160, a search engine web page 120 residing on search engine server 110. The search engine web page 120 has a query box in which the user can enter, for example by typing, a search term of one or more keywords. Or, the user can query the search engine server 110 through a query box hyperlinked to the search engine server 110 and located on a web page stored at a remote web server. When the user has finished entering the search term, he may transmit the search query to search engine server 110 by clicking on a provided hyperlink. The hypertext links can access web pages anywhere on the Internet.

Search engine server 110 will then generate a search result list page and transmit the page to the user at the communication device via communication network 130. In response to receiving the search query, search engine server 110 searches search database 116 for terms in the search query to determine relevant search results. Search engine server 116 can then provide to a search application 155 of the electronic communication device 150 these search results, via communications network 130.

From the above description, then, it can be seen that a search engine server, coupled to a communications network, can facilitate search optimization. The processor and a search database of a search engine server, coupled together and in cooperative arrangement, are configured to: in response to receiving a search query generated by a user of an electronic communication device, provide to the user relevant search results. Further, the processor and the search database of the search engine server are in cooperative arrangement and configured to perform a search on an updated search query generated by the user of the electronic communication device. The updated search query may be an initial search query in the case where the user does not use any of the suggested keywords or where none can be provided, one or more keyword suggestions provided to the user that are relevant to the search, or some combination of these. The search engine server can return the results of the search on the updated search query to the user via the electronic communication device.

Search engine server 110 may include a number of different servers, with each server having one or more processors 112, databases 116, memories 114, and respective communication interfaces 118. Load balancing between various search engine servers 110 may be employed in such configurations.

Communication device 150 is a two-way electronic communication device having at least data and possibly also voice communication capabilities, and the capability to communicate with other communication devices or computer systems, for example, via the Internet. A communication device 150 may further be a mobile or handheld electronic device and may be wireless. Depending on the functionality provided by the electronic communication device, in the various example embodiments described herein, the device may be a data communication device, a multiple-mode communication device configured for both data and voice communication, a smartphone, a mobile telephone or a personal digital assistant PDA (personal digital assistant) enabled for wireless communication, or a computer system with a wireless modem. Other examples of mobile electronic devices include mobile, or handheld, wireless communication devices such as pagers, cellular phones, cellular smart-phones, wireless organizers, wirelessly enabled notebook computers, and so forth. The mobile electronic device may also be a portable electronic device without wireless communication capabilities, such as a handheld electronic game device, digital photograph album, digital camera, or other device.

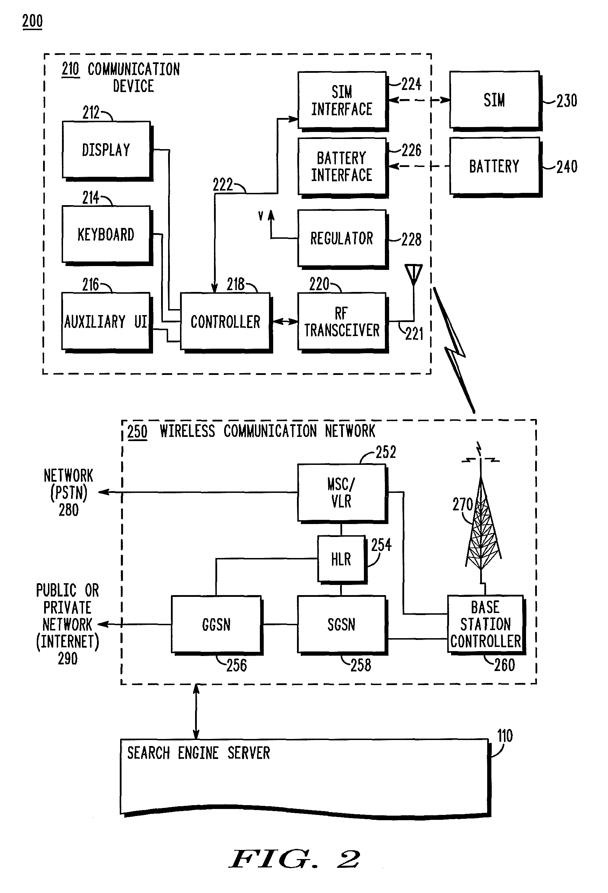

To illustrate example system architecture, **FIG. 2** shows a block diagram of a wireless communication system 200 which includes an electronic communication device 210, such as a wireless or mobile communication device, which communicates through a wireless communication network 250, to a search engine server 110, as previously discussed in FIG. 1. Communication device 210 is shown as communication device 150 in FIG. 1. An example wireless implementation of electronic communication device 210 and a wireless communication network 250 with which electronic communication device 210 communicates will now be discussed. Communication device 210 has a visual display 212, a keyboard 214, and perhaps one or more auxiliary user interfaces (UI) 216, each of which are coupled to a controller 218. Controller 218 is also coupled to radio frequency (RF) transceiver circuitry 220 and an antenna 221. Controller 218 may be embodied as a central processing unit (CPU) which runs operating system software in a memory component (not shown). Controller 218 will normally control overall operation of electronic communication device 210, whereas signal processing operations associated with communication functions may be performed in RF transceiver circuitry 220. Controller 218 interfaces with device display 212 to display received information, stored information, user inputs, and the like. Keyboard 214 may be a physical keyboard or a virtual keyboard implemented via key images rendered on a touchscreen display can be a telephone type keypad or full alphanumeric keyboard. Keyboard 214 is normally provided for entering data for storage in electronic communication device 210, information for transmission to network 250, a telephone number to place a telephone call, commands to be executed on electronic communication device 210, and possibly other or different user inputs.

Electronic communication device 210 sends communication signals to and receives communication signals from network 250 over a wireless link via antenna 221. RF transceiver circuitry 220 performs functions similar to those of a tower station 270 and a base station controller (BSC) 260, including for example transmission/reception of data, modulation/demodulation and possibly encoding/decoding and encryption/decryption. It is also contemplated that RF transceiver circuitry 220 may perform certain functions in addition to those performed by BSC 260. It will be apparent to those skilled in art that RF transceiver circuitry 220 will be adapted to particular wireless network or networks in which electronic communication device 210 is intended to operate. When electronic communication device 210 is fully operational, an RF transmitter of RF transceiver circuitry 220 is typically keyed or turned on only when the transmitter is sending to network, and is otherwise turned off to conserve resources. Similarly, an RF receiver of RF transceiver circuitry 220 is typically periodically turned off to conserve power until the receiver is needed to receive signals or information during designated time periods.

Electronic communication device 210 includes a battery interface 226 for receiving one or more rechargeable batteries 240. Battery 240 provides electrical power to electrical circuitry in electronic communication device 210, and battery interface 226 provides for a mechanical and electrical connection for battery 240. Battery interface 226 is coupled to a regulator 228 which regulates power to the device. Electronic communication device 210 may be a handheld portable communication device, which includes a housing (e.g., a plastic housing) which carries and contains the electrical components of electronic communication device 210 including battery 240. Electronic communication device 210 operates using a Subscriber Identity Module (SIM) 230 which is connected to or inserted in electronic communication device 210 at a SIM interface 224. SIM 230 is one type of a conventional "smart card" used to identify an end user (or subscriber) of electronic communication device 210 and to personalize the device, among other things. Without SIM 230, the communication device terminal is not fully operational for communication through wireless network 250. By inserting SIM 230 into electronic communication device 210, an end user can have access to any and all of his/her subscribed services. SIM 230 generally includes a processor and memory for storing information. Since SIM 230 is coupled to SIM interface 224, SIM 230 is coupled to controller 218 through communication lines 222. In order to identify the subscriber, SIM 230 contains some user parameters such as an International Mobile Subscriber Identity (IMSI). An advantage of using SIM 230 is that end users are not necessarily bound by any single physical mobile communication device. SIM 230 may store additional user information for the communication device 210 as well, including datebook (or calendar) information and recent call information.

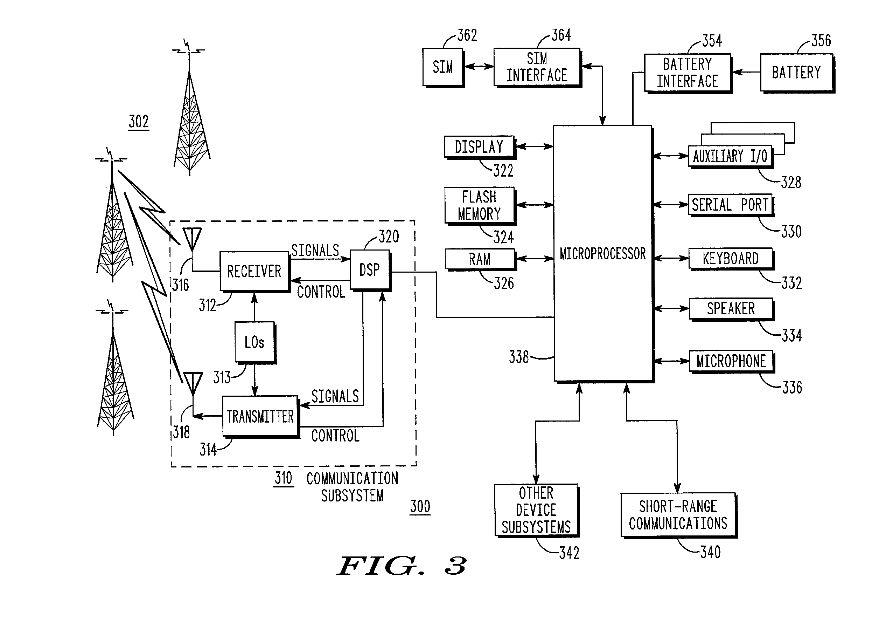

Electronic communication device 210 may consist of a single unit, such as a data communication device, a cellular telephone, a multiple-function communication device with data and voice communication capabilities, a personal digital assistant (PDA) enabled for wireless communication, or a computer incorporating an internal modem. Electronic communication device 210 may be a handheld portable communication device which includes a housing (e.g., a plastic housing) which carries and contains the electrical components of electronic communication device 210. Alternatively, electronic communication device 210 may be a multiple-module unit including a plurality of separate components, including but in no way limited to a computer or other device connected to a wireless modem. In particular, for example, in the communication device block diagram 210 of FIG. 1, RF transceiver circuitry 220 and antenna 221 may be implemented as a radio modem unit that may be inserted into a port on a laptop computer. In this case, the laptop computer would include display 212, keyboard 214, one or more auxiliary UIs 216, and controller 218 embodied as the computer's CPU. It is also contemplated that a computer or other equipment not normally capable of wireless communication may be adapted to connect to and effectively assume control of RF transceiver circuitry 220 and antenna 221 of a single-unit device such as one of those described above. Such an electronic communication device 210 may have a more particular implementation as described later in FIG. 3.

Electronic communication device 210 communicates in and through wireless communication network 250. Wireless communication network 250 may be a cellular telecommunications network. In the example embodiment of FIG. 1, wireless network 250 is configured in accordance with General Packet Radio Service (GPRS) and a Global Systems for Mobile (GSM) technologies. Today, such a mobile communication device may further operate in accordance with Enhanced Data rates for GSM Evolution (EDGE) or Enhanced GPRS (EGPRS), as described in the Background section. In such environment, wireless network 250 includes a base station controller (BSC) 260 with an associated tower station 270, a Mobile Switching Center (MSC) 252, a Home Location Register (HLR) 254, a Serving General Packet Radio Service (GPRS) Support Node (SGSN) 258, and a Gateway GPRS Support Node (GGSN) 256. MSC 252 is coupled to BSC 260 and to a landline network, such as a Public Switched Telephone Network (PSTN) 280. SGSN 258 is coupled to BSC 260 and to GGSN 256, which is in turn coupled to a public or private data network 290 (such as the Internet). HLR 254 is coupled to MSC 252, SGSN 258, and GGSN 256.

Station 270 is a fixed transceiver station, and station 270 and BSC 260 may be referred to as transceiver equipment. The transceiver equipment provides wireless network coverage for a particular coverage area commonly referred to as a "cell". The transceiver equipment transmits communication signals to and receives communication signals from mobile communication devices within its cell via station 270. The transceiver equipment normally performs such functions as modulation and possibly encoding and encryption of signals to be transmitted to the mobile communication device in accordance with particular, usually predetermined, communication protocols and parameters, under control of its controller. The transceiver equipment similarly demodulates and possibly decodes and decrypts, if necessary, any communication signals received from electronic communication device 210 within its cell. Communication protocols and parameters may vary between different networks. For example, one network may employ a different modulation scheme and operate at different frequencies than other networks.

The wireless link shown in communication system 200 of FIG. 2 represents one or more different channels, typically different radio frequency (RF) channels, and associated protocols used between wireless network 250 and electronic communication device 210. An RF channel is a limited resource to be conserved, due to limits in overall bandwidth and a limited battery power of electronic communication device 210. Those skilled in art will appreciate that a wireless network in actual practice may include hundreds of cells, each served by a station 270 (i.e. or station sector), depending upon desired overall expanse of network coverage. All pertinent components may be connected by multiple switches and routers (not shown), controlled by multiple network controllers.

For all electronic communication devices 210 registered with a network operator, permanent data (such as electronic communication device 210 user's profile) as well as temporary data (such as electronic communication device's 210 current location) are stored in HLR 254. In case of a voice call to electronic communication device 210, HLR 254 is queried to determine the current location of electronic communication device 210. A Visitor Location Register (VLR) of MSC 252 is responsible for a group of location areas and stores the data of those mobile electronic communication devices that are currently in its area of responsibility. This data includes parts of the permanent communication device data that have been transmitted from HLR 254 to the VLR for faster access. However, the VLR of MSC 252 may also assign and store local data, such as temporary identifications. Optionally, the VLR of MSC 252 can be enhanced for more efficient co-ordination of GPRS and non-GPRS services and functionality (e.g., paging for circuit-switched calls which can be performed more efficiently via SGSN 258, and combined GPRS and non-GPRS location updates).

Serving GPRS Support Node (SGSN) 258 is at the same hierarchical level as MSC 252 and keeps track of the individual locations of communication devices. SGSN 258 also performs security functions and access control. Gateway GPRS Support Node (GGSN) 256 provides interworking with external packet-switched networks and is connected with SGSNs (such as SGSN 258) via an IP-based GPRS backbone network. SGSN 258 performs authentication and cipher setting procedures based on algorithms, keys, and criteria (e.g., as in existing GSM). In conventional operation, cell selection may be performed autonomously by electronic communication device 210 or by the transceiver equipment instructing electronic communication device 210 to select a particular cell. Electronic communication device 210 informs wireless network 250 when it reselects another cell or group of cells, known as a routing area.

In order to access GPRS services, electronic communication device 210 first makes its presence known to wireless network 250 by performing what is known as a GPRS "attach". This operation establishes a logical link between electronic communication device 210 and SGSN 258 and makes electronic communication device 210 available to receive, for example, pages via SGSN, notifications of incoming GPRS data, or SMS messages over GPRS. In order to send and receive GPRS data, electronic communication device 210 assists in activating the packet data address that it wants to use. This operation makes electronic communication device 210 known to GGSN 256; interworking with external data networks can thereafter commence. User data may be transferred transparently between electronic communication device 210 and the external data networks using, for example, encapsulation and tunneling. Data packets are equipped with GPRS-specific protocol information and transferred between electronic communication device 210 and GGSN 256.

FIG. 3 is a detailed block diagram of an example mobile communication device 300 of the present disclosure. Mobile communication device is a mobile version of communications devices 150 and 210, discussed previously. Mobile communication device 300 may be a two-way communication device having at least voice and advanced data communication capabilities, including the capability to communicate with other computer systems. Depending on the functionality provided by mobile communication device 300, it may be referred to as a data messaging device, a two-way pager, a cellular telephone with data messaging capabilities, a wireless Internet appliance, or a data communication device (with or without telephony capabilities). Mobile communication device 300 may communicate with any one of a plurality of fixed transceiver stations 302 within its geographic coverage area.

Mobile communication device 300 will normally incorporate a communication subsystem 310, which includes a receiver 312, a transmitter 314, and associated components, such as one or more (which may be embedded or internal) antenna elements 316 and 318, local oscillators (LOs) 313, and a processing module such as a digital signal processor (DSP) 320. Communication subsystem 310 is analogous to RF transceiver circuitry 220 and antenna 221 shown in FIG. 2. As will be apparent to those skilled in the field of communications, particular design of communication subsystem 310 depends on the communication network in which mobile communication device 300 is intended to operate.

Mobile communication device 300 may send and receive communication signals over the network after required network registration or activation procedures have been completed. Signals received by antenna 316 through the network are input to receiver 312, which may perform such common receiver functions as signal amplification, frequency down conversion, filtering, channel selection, and the like, and in example shown in FIG. 3, analog-to-digital (A/D) conversion. A/D conversion of a received signal allows more complex communication functions such as demodulation and decoding to be performed in DSP 320. In a similar manner, signals to be transmitted are processed, including modulation and encoding, for example, by DSP 320. These DSP-processed signals are input to transmitter 314 for digital-to-analog (D/A) conversion, frequency up conversion, filtering, amplification and transmission over communication network via antenna 318. DSP 320 not only processes communication signals, but also provides for receiver and transmitter control. For example, the gains applied to communication signals in receiver 312 and transmitter 314 may be adaptively controlled through automatic gain control algorithms implemented in DSP 320.

Network access is associated with a subscriber or user of mobile communication device 300, and therefore mobile communication device 300 requires a Subscriber Identity Module or "SIM" card 362 to be inserted in a SIM interface 364 in order to operate in the network. SIM 362 includes those features described in relation to FIG. 2. Mobile communication device 300 is a battery-powered device so it also includes a battery interface 354 for receiving one or more rechargeable batteries 356. Such a battery 356 provides electrical power to most if not all electrical circuitry in mobile communication device 300, and battery interface 354 provides for a mechanical and electrical connection for it. The battery interface 354 is coupled to a regulator (not shown) which provides a regulated voltage V as required to the electrical circuitry.

Mobile communication device 300 includes a microprocessor 338 (which is one implementation of controller 218 of FIG. 2) which controls overall operation of mobile communication device 300. Communication functions, including at least data and voice communications, are performed through communication subsystem 310. The communication techniques of the present disclosure may generally be controlled by microprocessor 338 in connection with DSP 320. Microprocessor 338 also interacts with additional device subsystems such as a display 322, a flash memory 324, a random access memory (RAM) 326, auxiliary input/output (I/O) subsystems 328, a serial port 330, a keyboard 332, a speaker 334, a microphone 336, a short-range communications subsystem 340, and any other device subsystems 342. Some of the subsystems shown in FIG. 2 perform communication-related functions, whereas other subsystems may provide "resident" or on-device functions. Notably, some subsystems, such as keyboard 332 and display 322, for example, may be used for both communication-related functions, such as entering a text message for transmission over a communication network, and device-resident functions such as a calculator or task list. Operating system software used by microprocessor 338 may be stored in a persistent store such as flash memory 324, which may alternatively be a read-only memory (ROM) or similar storage element (not shown). Those skilled in the art will appreciate that the operating system, specific device applications, or parts thereof, may be temporarily loaded into a volatile store such as RAM 326.

Microprocessor 338, in addition to its operating system functions, enables execution of software applications on mobile communication device 300. A predetermined set of applications which control basic device operations, including at least data and voice communication applications, will normally be installed on mobile communication device 300 during its manufacture. An application that may be loaded onto mobile communication device 300 may be a personal information manager (PIM) application having the ability to organize and manage data items relating to a user such as, but not limited to, e-mail, calendar events, voice mails, appointments, and task items. Naturally, one or more memory stores are available on mobile communication device 300 and SIM 356 to facilitate storage of PIM data items and other information. The PIM application has the ability to send and receive data items via the wireless network. In the present disclosure, PIM data items are seamlessly integrated, synchronized, and updated via the wireless network, with the mobile device user's corresponding data items stored or associated with a host computer system thereby creating a mirrored host computer on mobile communication device 300 with respect to such items. This duplication is especially advantageous where the host computer system is the mobile communication device user's office computer system. Additional applications may also be loaded onto mobile communication device 300 through network, an auxiliary I/O subsystem 328, serial port 330, short-range communications subsystem 340, or any other suitable subsystem 342, and installed by a user in RAM 326 or a non-volatile store (not shown) for execution by microprocessor 338. Such flexibility in application installation increases the functionality of mobile communication device 300 and may provide enhanced on-device functions, communication-related functions, or both. For example, secure communication applications may enable electronic commerce functions and other such financial transactions to be performed using mobile communication device 300.

In a data communication mode, a received signal such as a text message, an e-mail message, or web page download will be processed by communication subsystem 310 and input to microprocessor 338. Microprocessor 338 will further process the signal for output to display 322 or alternatively to auxiliary I/O device 328. A user of mobile communication device 300 may also compose data items, such as e-mail messages, for example, using-keyboard 332 in conjunction with display 322 and possibly auxiliary I/O device 328. Keyboard 332 may be a complete alphanumeric keyboard or telephone-type keypad. These composed items may be transmitted over a communication network through communication subsystem 310. For voice communications, the overall operation of mobile communication device 300 is substantially similar, except that the received signals would be output to speaker 334 and signals for transmission would be generated by microphone 336. Alternative voice or audio I/O subsystems, such as a voice message recording subsystem, may also be implemented on mobile communication device 300. Although voice or audio signal output may be accomplished primarily through speaker 334, display 322 may also be used to provide an indication of the identity of a calling party, duration of a voice call, or other voice call related information, as some examples.

Serial port 330 in FIG. 3 may be implemented in a personal digital assistant (PDA)-type communication device for which synchronization with a user's desktop computer is a desirable, albeit optional, component. Serial port 330 enables a user to set preferences through an external device or software application and extends the capabilities of mobile communication device 300 by providing for information or software downloads to mobile communication device 300 other than through a wireless communication network. The alternate download path may, for example, be used to load an encryption key onto mobile communication device 300 through a direct and thus reliable and trusted connection to thereby provide secure device communication. Short-range communications subsystem 340 of FIG. 3 is an additional optional component which provides for communication between mobile communication device 300 and different systems or devices, which need not necessarily be similar devices.

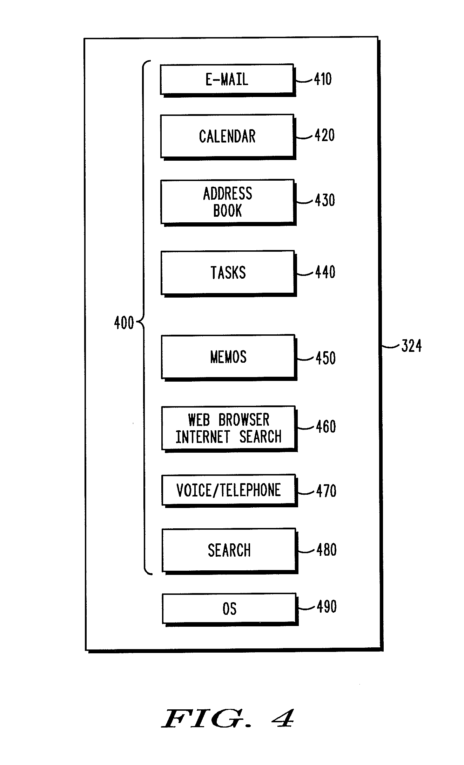

As shown further in **FIG. 4**, memory 324 of mobile communication device 300 includes a plurality of applications or routines 400 associated with the visually displayed icons displayed on the display 322 of the mobile communication device for the processing of data. Applications 400 may be in any of a variety of forms such as, without limitation, software, firmware, and the like. Applications 400 include, for example, an Electronic Mail (E-Mail) application 410 associated with E-mail icon, a Calendar application 420 associated with Calendar icon, an Address Book application 430 associated with Address Book icon, a Tasks application 440 associated with Tasks icon, a MemoPad (Memos) application 450 associated with a MemoPad icon, a Web Browser or search application 460 associated with Web Browser/Search Application icon, a Voice/Telephone application 470 associated with a Voice/Telephone icon, and a Local Device Search application 480 associated with a Local Device Search icon. An operating system (OS) program 490 also resides in memory 324.

The "home" screen output may be currently active and constitutes the main "ribbon" application for displaying these icons on the display of the communication device. An application, such as E-mail application 410, may then be initiated (opened or viewed) from the user interface provided by keyboard 214, and perhaps one or more auxiliary user interfaces (UI) 216, by providing a suitable user input to the application. For example, E-mail application 410 may be initiated (opened or viewed) by activation of a pointing device, such as a rotating positioning wheel or stylus, for example, to highlight an icon associated with the E-mail application and providing a selection input. As another example, display 322 may display an icon associated with Search application 480 and accepts input from a positioning wheel or stylus to initiate a search from that icon. Applications 400 may be additionally or alternatively initiated (opened or viewed) from the user interface by providing another suitable input to it, such as by suitably rotating or "rolling" a trackball and providing a selection input by, for example, pushing the trackball or through appropriate manipulation of a stylus making contact with a touch screen of the display.

Although a specific mobile communication device 300 has just been described, any suitable mobile communication device or terminal may be part of the inventive methods and apparatus which will be described in fuller detail below. Note that many components of mobile device 202 shown and described may not be included (e.g., a full QWERTY keypad may be optional).

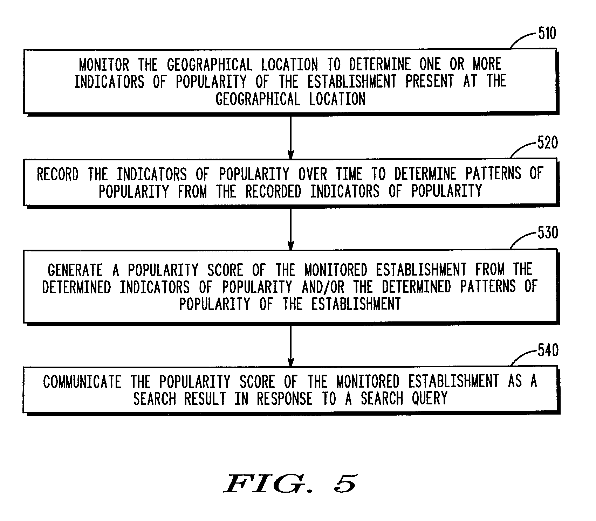

Reference is now made to **FIG. 5**, in which flowchart 500 illustrates a method of generating a popularity score of an establishment of interest in a geographical location from at least one determined indicator of popularity associated with the establishment. In this method, the geographical location of the establishment is monitored in order to determine one or more indicators of popularity of the establishment.

At Block 510, the geographical location of an establishment, such as a restaurant, is monitored to determine one or more indicators of popularity present at the geographical location. As previously mentioned, in addition to a restaurant, the establishment may be a store, a sports complex, entertainment venue, retail establishment or the like. As previously discussed, a user of the mobile communication device may wish to know the popularity score of an establishment in a given geographical location and so may initiate a search request to find out this information using the search application 460 running on the user's mobile device. The user may be interested in this information in a number of settings and for a variety of reasons. For example, the user may be visiting a city or neighborhood with which he or she is unfamiliar and may value the popularity score or rating to find a good restaurant while in the area. The monitoring may be in response to a search query about the restaurant or the geographical location or the monitoring may be on-going monitoring of the geographical location of the restaurant, as will be further discussed.

The geographic location may refer to an address, street, city, etc. or other physical location where the establishment is located. The geographic location may be monitored in a variety of ways to determine indicators of popularity of the establishment in the monitored location. Indicators of popularity are varied and the type of indicator of popularity to be determined may determine how the geographic location is monitored. Indicators of popularity may include, for example, the number of people who frequent the restaurant, when people frequent the restaurant, and whether locals frequent the restaurant, in the case where the establishment is a restaurant. Indicators of popularity may in some cases correspond to indicators of quality of the restaurant. Both of these indicators of popularity may be determined by monitoring the physical location of the restaurant.

Consider the number of people who frequent the establishment as an indicator of popularity, and thus quality. Continuing with the restaurant example, generally, the more people who frequent a restaurant, the more popular the restaurant may be considered. Determining the number of people who frequent the restaurant as an indicator of popularity may be accomplished by identifying location-enabled mobile communication devices, such as mobile cellular phones, smartphones, tablets, and the like that are themselves at the geographical location of the restaurant and determining from the number of identified mobile communication devices at the geographical location an estimated number of persons that are frequenting the restaurant. For example, if 100 mobile communication devices are at the restaurant, then it may be estimated that at least 100 users of the devices are customers at the restaurant. Identifying the location-enabled mobile communication devices at the restaurant may include determining a number of mobile phone users in the geographical location of the restaurant and determining a number of near field communication (NFC) tags in the geographical location of the restaurant. Also, determining the number of persons frequenting a restaurant may be accomplished by analyzing image data captured at the geographical location of the restaurant. Image data includes images taken at the geographical location by a camera of the mobile communication device 300, which may communicate with any one of fixed transceiver stations 302 within its geographic coverage area to transmit image data. Alternately, a fixed camera at the geographical location may capture image data and transmit the image data to a mobile communication device or to a fixed transceiver station. The images may be analyzed to determine a length of a queue of persons waiting at the restaurant or a number of cars at the geographical location of the restaurant, such as in a parking lot, to determine an estimated number of persons frequenting the restaurant at the time the image is captured at the geographical location of the restaurant. Additionally, the type of cars present in the parking lot of a restaurant may have some weighting in the popularity score of a restaurant; a preponderance of certain types of cars may bias the popularity score of the restaurant either higher or lower.

Another indicator of popularity is the time of day when persons frequent the restaurant at the geographical location. This information may be determined from monitoring the geographical location of the restaurant. People frequenting a restaurant late in the day may indicate that people stay at the restaurant for a long time and bias towards a higher popularity rating. A local hangout may be packed at all times during operating hours and may indicate a popular restaurant. A restaurant in a tourist area may not be busy late in the day. The restaurant may be monitored at the geographical location at periodic time intervals during operating hours of the restaurant to determining a distribution of number of persons who frequent the restaurant over the periodic time intervals. The popularity score of the restaurant may be generated using the determined distribution of the number of persons frequenting the restaurant over the periodic time intervals.

With regard to monitoring the restaurant or other establishment at periodic time intervals, a time interval of the periodic time intervals corresponding to a peak number of persons frequenting the establishment can be determined from the determined distribution of the number of persons frequenting the restaurant over the periodic time intervals. Moreover, with regard to generating the popularity score of the establishment using the determined distribution of the number of persons frequenting the establishment over the periodic time intervals, consider the following examples in which the establishments are restaurants. A late time interval corresponding to a peak number of persons may indicate that people stay at the restaurant for a long period of time, and bias the restaurant towards a higher popularity score. The restaurant having a distribution that indicates being busier earlier in the day than later in the day may indicate that the geographical area of the restaurant is in a tourist area and this may accordingly affect the popularity score given the restaurant. A substantially equal distribution of the number of persons frequenting the restaurant over the monitored periodic time intervals may indicate that demand for the restaurant remains consistently high and may bias the restaurant towards a higher popularity score.

Whether locals frequent the restaurant is another indicator of popularity, thus determining how many local patrons (locals) frequent the restaurant may be used to generate a popularity score. Generally, the more locals that frequent the restaurant, the more popular the restaurant and thus the higher the popularity score. The number of locals frequenting the restaurant at any given time may be determined by determining the number of local mobile communication devices, such as local cellular phones or local smartphones, at the geographical location. Thus, determining how many local persons frequent the restaurant further may include identifying mobile devices in the geographical location of the restaurant associated with one or more persons; and determining from a unique identifier of each of the identified mobile devices in the geographical location of the restaurant whether the identified mobile device is associated with a local person. For example, the unique identifier may be a mobile telephone number, in which an area code of the mobile telephone number indicates whether the identified mobile device is associated with a local person.

Determining how many local persons frequent the restaurant may also include analyzing image data captured at the geographical location of the restaurant to identify license plates associated with one or more vehicles located at the geographical location of the restaurant. From the identified license plates, the number of local persons who frequent the restaurant may be determined or at least inferred.

Monitoring of the geographical location in which the restaurant is located may be an ongoing effort, or the monitoring may commence in response to a user search query from a user of a communications device that launches the search via a user interface of the communications device in communication with a search application, such as a browser. Monitoring the location of a restaurant in a high-traffic, tourist area may be on-going, as many people visiting that area would want to know about the popularity of restaurants there. On-going monitoring of such a geographic location to collect images, data or other information that may reflect one or more indicators of popularity will allow such indicators to be recorded, from which patterns of popularity can be determined. Either way, information captured from the monitoring of indicators of popularity at the location of the restaurant may be used to generate a popularity score or ranking, and the generation of the popularity score or ranking is transparent to the user initiating a search for a good restaurant.

These indicators of popularity present at the geographical location of the restaurant or other establishment may be captured, such as images taken by a camera or other recording device of a communications device at the site, and recorded so that patterns of popularity may optionally be determined from the recorded indicators of popularity, at Block 520. For example, consider images of a parking lot at the restaurant that are taken and recorded over a week period. From that information, it may be determined that the restaurant has many more people present in the evening as compared to the day, and more people frequenting the restaurant on the weekend as compared to the week. Such patterns of information may be used in generating a popularity score of the monitored restaurant.

Once any one or multiple ones of these indicators of popularity are determined, a popularity score may be generated. At Block 530, a popularity score of the restaurant is generated from the indicators of popularity of the restaurant previously determined at Block 510. These described indicators of popularity may be used singly or in combination to determine the popularity score. Further, the term "popularity score" may encompass either raw, unranked popularity information, such as the number of cars, the number of people, etc., or popularity score may comprise a popularity ranking in which the popularity score of the restaurant is given in comparison to other restaurants, such as a geographical area (street, neighbourhood, city, etc.) that includes the geographical location, or in comparison to restaurants of the same type in the same geographical area, e.g., the best Asian restaurant in the city is X or the monitored restaurant is ranked the 3^{rd} most popular Asian restaurant out of 10 ranked Asian restaurants in the geographic area that encompasses the monitored restaurant.

At Block 540, the popularity score or ranking may be communicated as a search result in response to a search user initiated by a user. The search query may be a query about restaurants in the geographical area that includes the geographical location of the restaurant, or it may be a query about a particular restaurant itself. In the case where the search query is a query about restaurants in the geographical area, the methodology may further include monitoring a geographical location for a number of restaurants in the geographical area and then generating a popularity score of each of these restaurants in the geographical area. From this information about a number of restaurants, a popularity ranking of the restaurants can be determined in accordance with the generated popularity score of each of the plurality of restaurants. The popularity ranking of the restaurants may then be provided as a search result in response to the search query about restaurants in the geographical area. Consider, as an example, a search about restaurants located within a block area of a busy, tourist area of a city. Perhaps five of these restaurants have ongoing monitoring of their location so that from collected information, including images of cars, people, license plates or phone numbers of cellular or smartphone devices, one or more indicators of popularity can be determined for each of these five restaurants and used to generate respective popularity scores and, in the aggregate, a ranking for each of these restaurants vis-à-vis the other restaurants within the block. Such information is useful and relevant to a tourist wishing to locate the best restaurant in that geographical area.

While the blocks including the methods are shown as occurring in a particular order, it will be appreciated by those skilled in the art that many of the blocks are interchangeable and can occur in different orders than that shown without materially affecting the end results of the methods.

The implementations of the present disclosure described above are intended to be examples only. Those of skill in the art can effect alterations, modifications and variations to the particular example embodiments herein without departing from the intended scope of the present disclosure. Moreover, selected features from one or more of the above-described example embodiments can be combined to create alternative example embodiments not explicitly described herein.

It will be appreciated that any module or component disclosed herein that executes instructions may include or otherwise have access to non-transient and tangible computer readable media such as storage media, computer storage media, or data storage devices (removable or non-removable) such as, for example, magnetic disks, optical disks, or tape data storage. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the server, any component of or related to the network, backend, etc., or accessible or connectable thereto. Any application or module herein described may be implemented using computer readable/executable instructions that may be stored or otherwise held by such computer readable media.

The present disclosure may be embodied in other specific forms without departing from its spirit or essential characteristics. The described example embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A method for determining popularity for one or more establishments located in a geographical area, the method comprising:
monitoring a geographical location of an establishment located in the geographical area to determine at least one indicator of popularity of the establishment (510); and
generating a popularity score of the monitored establishment from the determined at least one indicator of popularity of the establishment (530).

2. The method of claim 1, further comprising:
communicating the popularity score of the monitored establishment as a search result in response to receiving a search query (540), and preferably wherein the search query concerns establishments located in the geographical area, the method further comprising:
performing the monitoring and generating for a plurality of establishments located in the geographical area; and
determining a popularity ranking of each establishment of the plurality of establishments in the geographical area in accordance with the generated popularity score.
or wherein the search query concerns the monitored establishment.

3. The method of claim 2, and preferably further comprising:
communicating the popularity ranking of each establishment of the plurality of establishments as the search result in response to the search query about establishments in the geographical area (540).

4. The method of claim 1, further comprising:
determining a popularity ranking of the monitored establishment in comparison to a popularity score of each establishment of a plurality of establishments located in the geographical area, the popularity ranking determined in accordance with the generated popularity score of the monitored establishment;
and
in response to receiving a search query, providing the determined popularity ranking of the monitored establishment as a search result of the search query and preferably wherein the popularity ranking of the monitored establishment reflects the generated popularity score of the monitored establishment compared with the popularity score of each establishment of the plurality of establishments in the geographical area.

5. The method of claim 1, wherein the monitoring the geographical location of the establishment is performed in response to receiving a search query about the establishment, or
wherein the monitoring is performed in response to receiving a search query about establishments in the geographical area, or
further comprising:
recording the at least one indicator of popularity of the establishment over time to determine a pattern of popularity of the establishment from the recorded at least one indicator of popularity (520); and
generating the popularity score of the establishment from the determined pattern of popularity, or
where monitoring the geographical location further comprises determining as an indicator of popularity of the establishment a number of persons who frequent the establishment at the geographical location, and preferably
wherein determining the number of persons_who frequent the establishment comprises:
identifying mobile devices in the geographical location of the establishment; and
estimating from the number of identified mobile devices in the geographical location of the establishment an estimated number of persons frequenting the establishment or preferably
wherein determining the number of persons_who frequent the establishment comprises:
analyzing image data captured at the geographical location of the establishment to determine one or more of a length of a queue of persons waiting at the establishment and a number of cars at the geographical location of the establishment to determine an estimated number of persons frequenting the establishment at a time the image data is captured.

6. The method of claim 6, and preferably wherein identifying mobile devices comprises one or more of determining a number of mobile phone users in the geographical location of the establishment and determining a number of near field communication (NFC) tags in the geographical location of the establishment.

7. The method of claim 1, wherein monitoring the geographical location further comprises determining as an indicator of popularity of the establishment a time of day when persons frequent the establishment, and preferably wherein determining the time of day when persons frequent the establishment comprises:
monitoring the establishment at periodic time intervals during operating hours of the establishment to determine a distribution of a number of persons frequenting the establishment over the periodic time intervals; and
generating the popularity score of the establishment using the determined distribution of the number of persons frequenting the establishment over the periodic time intervals.

8. The method of claim 7, further comprising:
from the determined distribution of the number of persons frequenting the establishment over the periodic time intervals, determining a time interval of the periodic time intervals corresponding to a peak number of persons frequenting the establishment, or
wherein a late time interval corresponding to a peak number of persons biases the popularity score higher, or
wherein the establishment having a distribution that indicates being busier earlier in the day than later in the day indicates the geographical area of the establishment is in a tourist area and biases the popularity score higher, or
wherein a substantially equal distribution of the number of persons frequenting the establishment over the periodic time intervals biases the popularity score higher.

9. The method of claim 1, wherein monitoring the geographical location further comprises determining as an indicator of popularity of the establishment a number of local persons who frequent the establishment
, wherein determining how many local persons frequent the establishment further comprises:
identifying mobile devices in the geographical location of the establishment associated with one or more persons; and
determining from a unique identifier of each of the identified mobile devices whether the identified mobile device is associated with a local person to determine the number of local persons who frequent the establishment and
preferably
wherein the unique identifier is a mobile telephone number and an area code of mobile telephone number indicates whether the identified mobile device is associated with a local person, or
wherein determining the number of local persons who frequent the establishment further comprises:
analyzing image data captured at the geographical location of the establishment to identify license plates associated with one or more vehicles located at the geographical location of the establishment; and
determining from the identified license plates the number of local persons who frequent the establishment.

10. A search engine server (110), comprising:
a processor (112); and
a search database (116) coupled to and in cooperative arrangement with the processor, the processor and the search database configured to:
in response to a received search query, determine at least one indicator of popularity of an establishment from information collected at a geographical location of the establishment (510); and
generate a popularity score of the monitored establishment from the determined at least one indicator of popularity of the establishment (530).

11. The server of claim 10, wherein the information collected at the geographical location of the establishment is provided to the search engine server and stored in the search database, or
the processor and the search database of the social network server further configured to:
communicate the popularity score of the monitored establishment as a search result in response to a search query received by the social network server (540),
wherein the search query concerns establishments located in a geographical area that includes the geographical location of the establishment and preferably
the processor and the search database of the social network server further configured to:
determine at least one indicator of popularity and generate a popularity score for each establishment of a plurality of establishments in the geographical area; and determine a popularity ranking of each establishment of the plurality of establishments in the geographical area in accordance with the generated popularity score,
the processor and the search database of the social network server further configured to:
communicate the popularity ranking of each establishment of the plurality of establishments as the search result in response to the search query about establishments in the geographical area.

12. The server of claim 10, the processor and the search database of the social network server further configured to:
determine a popularity ranking of the monitored establishment in comparison to a popularity score of each establishment of a plurality of establishments located in the geographical area, the popularity ranking determined in accordance with in response to receiving a search query, provide the determined popularity ranking of the monitored establishment as a search result of the search query,
and preferably
where the search query concerns one or more of the monitored establishment and establishments in the geographical area.

13. The server of claim 10, where the at least one indicator of popularity of the establishment present at the geographical location are recorded over time and the processor and the search database of the social network server further configured to:
determine patterns of popularity of the establishment from the recorded at least one indicator of popularity (520); and
generate the popularity score of the establishment from the determined patterns of popularity.

14. A non-transitory computer-readable medium having computer-executable instructions for causing a server comprising a processor and associated memory to optimize search results comprising:
determining at least one indicator of popularity of an establishment from information collected at a geographical location of the establishment; and generating a popularity score of the monitored establishment from the determined at least one indicator of popularity of the establishment.

15. The non-transitory computer-readable medium of claim 14, further comprising:
in response to receiving a received search query communicating the popularity score of the monitored establishment as a search result in response to a search query received by the social network server, or
where the search query concerns establishments located in a geographical area that includes the geographical location of the establishment and further comprising:
performing the determining and generating for a plurality of establishments located establishments in the geographical area; and
determining a popularity ranking of each establishment of the plurality of establishments in the geographical area in accordance with the generated popularity score, or
further comprising communicating the popularity ranking of each establishment of the plurality of establishments as the search result in response to the search query about establishments in the geographical area, or
where the search query concerns the monitored establishment, or
further comprising:
determining a popularity ranking of the monitored establishment in comparison to a popularity score of each establishment of a plurality of establishments located in the geographical area, the popularity ranking determined in accordance with the generated popularity score of the monitored establishment; and
in response to receiving a search query, providing the determined popularity ranking of the monitored establishment as a search result of the search query, or
where the at least one indicator of popularity of the establishment present at the geographical location are recorded over time and further comprising:
determining patterns of popularity of the establishment from the recorded at least one indicator of popularity; and
generating the popularity score of the establishment from the determined patterns of popularity.

## Amended claims

### Amended claims in accordance with Rule 137(2) EPC.

**1.** A computer implemented method for determining popularity for one or more establishments located in a geographical area, the method comprising:
monitoring a geographical location of an establishment located in the geographical area to determine at least one indicator of popularity of the establishment (510) by identifying the number of location-enabled mobile communication devices at the location; and
generating a popularity score of the monitored establishment from the determined at least one indicator of popularity of the establishment (530); and
communicating the popularity score of the monitored establishment as a search result in response to receiving a search query (540).

**2.** The method of claim 1, wherein the search query concerns establishments located in the geographical area, the method further comprising:
performing the monitoring and generating for a plurality of establishments located in the geographical area; and
determining a popularity ranking of each establishment of the plurality of establishments in the geographical area in accordance with the generated popularity score
or wherein the search query concerns the monitored establishment.

**3.** The method of claim 2, and preferably further comprising:
communicating the popularity ranking of each establishment of the plurality of establishments as the search result in response to the search query about establishments in the geographical area (540).

**4.** The method of claim 1, further comprising:
determining a popularity ranking of the monitored establishment in comparison to a popularity score of each establishment of a plurality of establishments located in the geographical area, the popularity ranking determined in accordance with the generated popularity score of the monitored establishment; and
in response to receiving a search query, providing the determined popularity ranking of the monitored establishment as a search result of the search query and preferably wherein the popularity ranking of the monitored establishment reflects the generated popularity score of the monitored establishment compared with the popularity score of each establishment of the plurality of establishments in the geographical area.

**5.** The method of claim 1, wherein the monitoring the geographical location of the establishment is performed in response to receiving a search query about the establishment, or wherein the monitoring is performed in response to receiving a search query about establishments in the geographical area, or
further comprising:
recording the at least one indicator of popularity of the establishment over time to determine a pattern of popularity of the establishment from the recorded at least one indicator of popularity (520); and
generating the popularity score of the establishment from the determined pattern of popularity, or
where monitoring the geographical location further comprises determining as an indicator of popularity of the establishment a number of persons who frequent the establishment at the geographical location, and preferably
wherein determining the number of persons who frequent the establishment comprises:
estimating from the number of identified mobile devices in the geographical location of the establishment an estimated number of persons frequenting the establishment or preferably wherein determining the number of persons who frequent the establishment comprises:
analyzing image data captured at the geographical location of the establishment to determine one or more of a length of a queue of persons waiting at the establishment and a number of cars at the geographical location of the establishment to determine an estimated number of persons frequenting the establishment at a time the image data is captured.

**6.** The method of claim 1, wherein identifying mobile devices comprises one or more of determining a number of mobile phone users in the geographical location of the establishment and determining a number of near field communication (NFC) tags in the geographical location of the establishment.

**7.** The method of claim 1, wherein monitoring the geographical location further comprises determining as an indicator of popularity of the establishment a time of day when persons frequent the establishment, and preferably
wherein determining the time of day when persons frequent the establishment comprises:
monitoring the establishment at periodic time intervals during operating hours of the establishment to determine a distribution of a number of persons frequenting the establishment over the periodic time intervals; and
generating the popularity score of the establishment using the determined distribution of the number of persons frequenting the establishment over the periodic time intervals.

**8.** The method of claim 7, further comprising:
from the determined distribution of the number of persons frequenting the establishment over the periodic time intervals, determining a time interval of the periodic time intervals corresponding to a peak number of persons frequenting the establishment, or
wherein a late time interval corresponding to a peak number of persons biases the popularity score higher, or
wherein the establishment having a distribution that indicates being busier earlier in the day than later in the day indicates the geographical area of the establishment is in a tourist area and biases the popularity score higher, or
wherein a substantially equal distribution of the number of persons frequenting the establishment over the periodic time intervals biases the popularity score higher.

**9.** The method of claim 1, wherein monitoring the geographical location further comprises determining as an indicator of popularity of the establishment a number of local persons who frequent the establishment
, wherein determining how many local persons frequent the establishment further comprises:
determining from a unique identifier of each of the identified mobile devices whether the identified mobile device is associated with a local person to determine the number of local persons who frequent the establishment and preferably
wherein the unique identifier is a mobile telephone number and an area code of mobile telephone number indicates whether the identified mobile device is associated with a local person, or
wherein determining the number of local persons who frequent the establishment further comprises:
analyzing image data captured at the geographical location of the establishment to identify license plates associated with one or more vehicles located at the geographical location of the establishment; and
determining from the identified license plates the number of local persons who frequent the establishment.

**10.** A search engine server (110), comprising:
a processor (112); and
a search database (116) coupled to and in cooperative arrangement with the processor, the processor and the search database configured to:
in response to a received search query, determine at least one indicator of popularity of an establishment from information collected at a geographical location of the establishment (510) comprising identifying the number of location-enabled mobile communication devices at the location and communicated as a search result; and
generate a popularity score of the monitored establishment from the determined at least one indicator of popularity of the establishment (530).

**11.** The server of claim 10, wherein the information collected at the geographical location of the establishment is provided to the search engine server and stored in the search database, or
the processor and the search database of a social network server further configured to:
communicate the popularity score of the monitored establishment as a search result in response to a search query received by the social network server (540), wherein the search query concerns establishments located in a geographical area that includes the geographical location of the establishment and preferably
the processor and the search database of the social network server further configured to:
determine at least one indicator of popularity and generate a popularity score for each establishment of a plurality of establishments in the geographical area; and
determine a popularity ranking of each establishment of the plurality of establishments in the geographical area in accordance with the generated popularity score,
the processor and the search database of the social network server further configured to:
communicate the popularity ranking of each establishment of the plurality of establishments as the search result in response to the search query about establishments in the geographical area.

**12.** The server of claim 10, the processor and the search database of the social network server further configured to:
determine a popularity ranking of the monitored establishment in comparison to a popularity score of each establishment of a plurality of establishments located in the geographical area, the popularity ranking determined in accordance with the generated popularity score of the monitored establishment; and
in response to receiving a search query, provide the determined popularity ranking of the monitored establishment as a search result of the search query, and preferably
where the search query concerns one or more of the monitored establishment and establishments in the geographical area.

**13.** The server of claim 10, where the at least one indicator of popularity of the establishment present at the geographical location are recorded over time and the processor and the search database of the social network server further configured to:
determine patterns of popularity of the establishment from the recorded at least one indicator of popularity (520); and
generate the popularity score of the establishment from the determined patterns of popularity.

**14.** A non-transitory computer-readable medium having computer-executable instructions for causing a server comprising a processor and associated memory to optimize search results comprising:
determining at least one indicator of popularity of an establishment from information collected at a geographical location of the establishment by identifying the number of location enabled mobile communication devices at the location; and
generating and communicating a search result a popularity score of the monitored establishment from the determined at least one indicator of popularity of the establishment.

**15.** The non-transitory computer-readable medium of claim 14, further comprising:
in response to receiving a received search query communicating the popularity score of the monitored establishment as a search result in response to a search query received by the social network server, or
where the search query concerns establishments located in a geographical area that includes the geographical location of the establishment and further comprising:
performing the determining and generating for a plurality of establishments located establishments in the geographical area; and
determining a popularity ranking of each establishment of the plurality of establishments in the geographical area in accordance with the generated popularity score, or
further comprising communicating the popularity ranking of each establishment of the plurality of establishments as the search result in response to the search query about establishments in the geographical area, or
where the search query concerns the monitored establishment, or
further comprising:
determining a popularity ranking of the monitored establishment in comparison to a popularity score of each establishment of a plurality of establishments located in the geographical area, the popularity ranking determined in accordance with the generated popularity score of the monitored establishment; and
where the at least one indicator of popularity of the establishment present at the geographical location are recorded over time and further comprising:
determining patterns of popularity of the establishment from the recorded at least one indicator of popularity; and
generating the popularity score of the establishment from the determined patterns of popularity.
